# EUROPÄISCHE PATENTSCHRIFT

(11) **EP 0 601 282 B1**
(45) Veröffentlichungstag und Bekanntmachung des Hinweises auf die Patenterteilung: **05.04.2000**
(21) Anmeldenummer: 93113403.5
(22) Anmeldetag: 23.08.1993
(51) Int. Cl.: A01K 1/015

(54) **Formteil, vorzugsweise für Standflächen des Viehs in Ställen**
Molded element, especially for surface supporting animals in stables
Pièce moulée, en particulier pour surface portant des animaux dans des étables

(30) Priorität: 21.09.1992 DE 4231373; 04.08.1993 DE 4326163
(43) Veröffentlichungstag der Anmeldung: 15.06.1994
(73) Patentinhaber: Michel, Heinrich, D-56269 Marienhausen (DE)
(72) Erfinder: Michel, Heinrich, D-56269 Marienhausen (DE)
(74) Vertreter: Herrmann-Trentepohl, Werner, Dipl.-Ing.

(56) Entgegenhaltungen:
- EP-A- 0 118 139
- EP-A- 0 396 881
- FR-A- 2 672 966
- US-A- 3 809 014

## Beschreibung

Die Erfindung betrifft ein Formteil gemäß dem Oberbegriff des Anspruches 1.

Die Erfindung bezieht sich insbesondere auf Formteile, aus denen Zwischenböden in Viehställen aufgebaut werden, wobei die Formteile auf die Stäbe eines Rostes aufgelegt werden und dadurch zwischen der Trittfläche des Bodens und dem Stallboden ein Raum unter dem Rost entsteht, in den Gülle und andere Flüssigkeiten ablaufen, um eine saubere Trittfläche zu gewährleisten. Solche Formkörper stellen regelmäßig Fertigteile dar und bestehen in der Regel aus thermoplastischem Kunststoff. Sie werden infolge ihrer Formschlüssigkeit mit den Roststäben und mit Hilfe der horizontal ineinander greifenden Verzahnungen sowie der vertikalen Verzapfungen in allen Richtungen verschiebungssicher gelagert.

Fertigeteile dieser Art sind bekannt (DE-C-39 27 462). Ihr Formkörper trägt an gegenüberliegenden Seiten die Verzahnungen, deren Zähne mit Aussparungen versehen sind, so daß sich die Formteile von oben auf die Profile der Roststäbe aufschieben lassen. Der Verzapfungen sind dagegen in der gegenüberliegenden Seite der in der Regel im Grundriß rechteckigen Formkörper angeordnet. Die durch eine besondere Profilierung rutschsicher gemachte Trittfläche bildet eine Baueinheit mit nach unten weisenden Formkörperkanten und Profilierungen, die die Formsteifigkeit des Formteiles erhöhen sollen. Die Trittfläche ist mit schlitzartigen Aussparungen unterbrochen, durch die die Gülle und andere Flüssigkeiten nach außen ablaufen. Jedoch kann die Platte des Formkörpers durch die beschriebenen Merkmale ohne entscheidende Einbuße an Festigkeit durch die schlitzartigen Aussparungen durchbrochen werden.

In der praktischen Anwendung solcher und anderer Böden ergibt sich bei empfindlichen Tieren zum Beispiel in der Schweinehaltung ein Problem, das sich insbesondere in der kalten Jahreszeit verschärft, aus den niedrigen Temperaturen, welche die Stallböden annehmen, namentlich wenn sie, wie beschrieben, aus Kunststoff bestehen. Den Tieren müssen nämlich ausreichend temperierte Liegeflächen geboten werden. Es sind zwar beheizte Stallböden beispeilsweise aus FR-A-2672966 bereits bekannt, die aus unterschiedlichen Werkstoffen bestehen. Wenn diese Böden zur Vermeidung einer aufwendigen elektrischen Widerstandsheizung mit einer Warmwasserheizung versehen sind, handelt es sich um Platten, in die Rohre eingebaut sind, oder, wie im Fall der FR-A-2672966, um eine mit einer Metallplatte abgedeckte Kunststoffmatte, durch die das Heizmedium strömt. Stallböden aus solchen Fertigteilen sind daher außerordentlich aufwendig und in der Regel für die Viehhaltung üblichen Zuschnitts nicht brauchbar.

Die Erfindung geht einen anderen Weg, dessen Grundgedanke im Anspruch 1 wiedergegeben ist. Weitere Merkmale der Erfindung sind Gegenstand der Unteransprüche. Gemäß der Erfindung, wie sie im Anspruch 1 wiedergegeben ist, wird das Formteil zu einem Hohlkörper ergänzt, der sich als Ganzes auch aus Kunststoff herstellen läßt, aber die ausschließliche Beheizung der Trittfläche durch die im Hohlraum untergebrachte Heizung bewirkt, da die nach unten wirkende Wärmedämmung ebenfalls im Hohlraum unter der Heizung untergebracht ist. Das neue Formteil läßt sich deswegen als Fertigteil ausbilden, das zusammen mit bekannten oder ausschließlich mit weiteren gleichartigen Formteilen gemäß der Erfindung wie im Stand der Technik zu einem Bodenbelag mit durchgehender Trittfläche in horizontaler und vertikaler Richtung verschiebungssicher auf einem Rost zusammengesetzt wird. Auf diese einfache Weise lassen sich relativ große Bodenflächen ausreichend anwärmen.

Der Anspruch 2 beschreibt eine Ausführungsform der Erfindung, die sich insbesondere für elektrische Widerstandsheizungen eignet, welche die Erfindung nicht ausschließt, auch wenn eine solche Heizung nur in Ausnahmefällen in Betracht gezogen werden kann.

Größere Verbreitung findet jedoch in der Regel die Ausführungsform nach Anspruch 3, bei der die Heizung für ein strömendes Heizmedium ausgelegt ist. Grundsätzlich kommt dafür auch Warmluft in Betracht. Üblich ist dagegen eine Warmwasserheizung. Für derartige Heizungen ist ein Rohrregister erfoderlich, für das die Erfindung eine einfache Ausführung vorschlägt, bei der das Rohrregister eine Baueinheit mit dem Formkörper bildet.

Im Anspruch 4 ist eine dieser Ausführungsformen weiter konkretisiert, wobei das Register aus einem Rohr besteht, welches die gesamte Trittfläche des Formkörpers beheizt. Für diese und andere Ausführungsformen der Erfindung, welche insbesondere für Warmwasserheizungen vorgesehen sind, bei denen das Rohrregister aus dem Deckel des Formkörpers herausgeformt ist, eignen sich die Rohrformen, die sich aus den Merkmalen des Anspruches 5 ergeben. Sie haben den Vorteil, daß sie dem Heizmedium einen ausreichenden Querschnitt bieten, jedoch auch gleichzeitig die Formsteifigkeit des ganzen Gebildes erheblich steigern.

Das Problem einer nach bevorzugter Ausführungsform mit einem flüssigen Heizmedium, d.h. in der Regel mit Warmwasser, betriebenen Beheizung der Trittfläche des Formteiles ist der Austritt von Gasen, die in warmem Wasser gelöst sind, also vor allem von Luft. Diese Luft verschlechtert den Wärmeübergang, wenn sie im warmen Wasser verbleibt. Sie muß deswegen aus dem Warmwasser abgeführt werden. Während bei den üblichen Warmwasserheizungen zu diesem Zweck Ventile vorgesehen werden, vermeidet die Erfindung diese notwendigerweise mit beweglichen Teilen verbundenen und damit auch kostspieligen Lösungen, indem sie eine ventillose Luftabführung des zur Beheizung verwendeten Warmwassers vorsieht.

Insbesondere eignen sich dafür Ausführungsformen der Erfindung, die mit den Merkmalen des Anspruches 6 versehen sind, weil hierbei der Mittelkanal die Luft aufnimmt, was besonders wirkungsvoll geschieht, wenn die Merkmale des Anspruches 7 verwirklicht werden. Das liegt daran, daß die zunächst im warmen Wasser gelöste Luft infolge des Wichteunterschiedes von Gas und Flüssigkeit längs der aufsteigenden Flanken in den Teillängen der Registerrohre nach oben strömt und durch die Beipässe in den Mittelkanal gelangt. Da sich im Mittelkanal nur ein Nebenstrom ausbildet, Hauptströme aber nach wie vor die Registerrohre passieren, tritt ein optimaler Wärmeübergang im Register und ein Abströmen der Luft aus dem Mittelkanal auf, ohne daß außer einer geeigneten Abmessung der Registerrohr- bzw. Kanalquerschnitte weitere Maßnahmen getroffen würden.

Wenn man den Weg der aus dem warmen Wasser ausperlende Luft weiter verfolgt, so ergibt sich für diese Ausführungsform der Erfindung, daß die Zu- und Abläufe des Warmwassers in das Register ebenfalls für den geschilderten Zweck von Bedeutung sind. Deshalb empfiehlt sich die Verwirklichung auch der Merkmale des Anspruches 8. Die hierbei vorgesehenen beiden Rohrstutzen haben zunächst den Vorteil, daß sich die Strömungsrichtung des warmen Wassers bedarfsweise wählen läßt, also von der jeweiligen Anordnung des neuen Formteiles im Zwischenboden unabhängig sind. Die über den Mündungen dieser Rohrstutzen angeordneten Dome nehmen andererseits die ausperlende Luft auf, wozu auch die Luft gehört, die durch den Mittelkanal abfließt, weil der Mittelkanal in den jeweiligen Dom mündet und die Mündungen der Rohrstutzen höher liegen. Auf diese Weise erreicht die Erfindung trotz Vermeidung besonderer Bauteile eine ausreichende Entlüftung des zur Beheizung verwendeten Warmwassers.

Für einen langlebigen, betriebssicheren Boden aus derartigen Formteilen ist es in vielen Bedarfsfällen erforderlich, die Heizung und deren Isolierung derart einzuschließen, daß diese Baugruppen nicht verschmutzen können, wobei in Ställen und ähnlichen Anwendungsgebieten auch die Forderung hinzukommt, Ungeziefer, darunter vor allem Nagetiere, aus dem Hohlraum fernzuhalten, in dem diese Teile untergebracht sind. Eine solche Verwahrung läßt sich mit den Merkmalen des Anspruches 9 erzielen. Hierbei ergibt sich der weitere Vorteil, daß die Wanne, welche den Hohlraum nach unten verschließt, die Kräfte abträgt, die sich aus der verschiebungssicheren Lagerung des Formteiles ergeben. Dabei kann es sich empfehlen, Wanne und Formkörper zuverlässig jedoch so miteinander zu verbinden, daß der Hohlraum bedarfsweise geschlossen und geöffnet werden kann, was mit den Merkmalen des Anspruches 9 auf einfache Weise erreichbar ist.

Es ist ferner zweckmäßig, die im Hohlraum untergebrachten Baugruppen des neuen Formteiles vor Feuchtigkeit zu schützen. In Viehställen handelt es sich dabei nicht nur um die flüssigen Bestandteile der Gülle, sondern auch um die Reinigungsflüssigkeiten, die zum Säubern der Trittfläche angewandt werden müssen. Mit den Merkmalen des Anspruches 11 wird das Notwendige durch formgeberische Maßnahmen erreicht, was zur Vereinfachung des Formteiles beiträgt und zuverlässig dafür sorgt, daß von der Trittfläche ablaufende Flüssigkeiten aus der Wanne austreten, bevor sie in den Hohlraum gelangen und dort Schaden anrichten können.

Die Trittfläche soll einerseits so beschaffen sein, daß sie die beschriebenen Flüssigkeiten möglichst schnell abführt, andererseits aber das Abrutschen auf der Trittfläche vermeidet, was bei der Viehhaltung von Huftieren und bei Kunststofftrittflächen besonders dringend ist. Diese an sich widersprechenden Forderungen lassen sich mit den Merkmalen des Anspruches 12 erfüllen, weil die Unterbrechung der Rippen zwar die Flüssigkeiten auf kurzem Wege abführen, die Abrutschvermeidung der Rippen aber nicht beeinträchtigen. Ähnlich verhält es sich mit den Kurzrippen, die in einigen oder in allen Taschen zusätzlich vorgesehen werden können.

Wenn Teile der beschriebenen Flüssigkeiten trotz aller Vorsichtsmaßnahmen dennoch in den Hohlraum des Formteiles gelangen sollten, werden sie sich zunächst auf der Bodenplatte sammeln. Die Verwirklichung der Merkmale des Anspruches 13 läßt diese Flüssigkeiten zur Mitte abfließen und aus den dort vorgesehenen Durchbrechungen austreten. Im Ergebnis können daher die im Hohlraum untergebrachten funktionsnotwendigen Teile des Formteiles auch unter ungünstigen Umständen trocken gehalten werden.

Obwohl der Wannenboden eben ausgeführt werden kann, läßt er sich in mehrfacher Hinsicht zum Optimieren des Formteiles verwenden. Eine zweckmäßige Ausführungsform der Erfindung ist daher im Anspruch 14 beschrieben, bei der durch die Unterteilung des Wannenbodens mit Rippen einerseits die Formsteifigkeit erhöht, andererseits aber eine durchgehende Unterstützung der Wärmeisolierung vermieden wird, um zwischen dem Wannenboden und dem zur Isolierung verwendeten Element zusätzliche Lufträume geschaffen werden, die u.a. zur Wärmeisolierung beitragen. Da zu den im Hohlraum untergebrachten Teilen vor allem die Wärmedämmung gehört, ist es zweckmäßig, diese aus gängigen Materialien zu fertigen. Mit dem Merkmal des Anspruches 15 dient dazu eine Wärmedämmplatte, die mit den dort beschriebenen Merkmalen verschiebungssicher im Hohlraum gelagert wird. Hierdurch wird die Alternative möglich, die im Anspruch 16 für die Beheizung dargestellt ist, weil die Heizung auch als elektrische Widerstandsheizung in einer solchen Matte untergebracht werden kann. Andererseits lassen sich für die Heizung und/oder ihre Isolierung auch härtende Stoffe verwenden, wie dies in den Ansprüchen 17 und 18 zum Ausdruck gebracht ist.

Bei den Ausführungsformen, welche aus den vorstehend erläuterten Gründen keine flachen Wannenböden verwenden, ergeben sich u.U. Schwierigkeiten beim Verpacken mehrerer Formteile für die Anlieferung am Verwendungsort. Diese lassen sich nämlich nicht verschiebungssicher aufeinander abstützen. Abhilfe schaffen die Merkmale des Anspruches 19. Sie ermöglichen die Stapelung, auch die verschiebungssichere Stapelung einer Vielzahl von Formteilen, die dann auch einfach verpackt werden können.

Die Einzelheiten, weiteren Merkmale und andere Vorteile der Erfindung ergeben sich aus der nachfolgenden Beschreibung eines Formteiles gemäß der Erfindung anhand der Figuren in der Zeichnung; es zeigen:
- Fig. 1: eine teilweise gezeichnete Draufsicht auf ein Formteil gemäß einer ersten Ausführungsform,
- Fig. 2: einen Schnitt längs der Linie II-II der Fig. 1,
- Fig. 3: einen Schnitt längs der Linie III-III der Fig. 1,
- Fig. 4: eine Einzelheit im wesentlichen im Schnitt wie bei VI in Fig. 1 angedeutet,
- Fig. 5: die mit V bezeichnete Einzelheit der Fig. 3 in dieser entsprechender abgebrochener Darstellung,
- Fig. 6: in der Fig. 1 entsprechender Darstellung den Formkörper gemäß einer weiteren Ausführungsform der Erfindung,
- Fig. 7: einen Schnitt längs der Linie A-A der Fig. 6,
- Fig. 8: einen Schnitt längs der Linie B-B der Fig. 6,
- Fig. 9: eine gegenüber der Ausführung nach Fig. 7 abgeänderte Ausführungsform,
- Fig. 10: eine gegenüber der Ausführung nach Fig. 8 abgeänderte Ausführungsform,
- Fig. 11: in abgebrochener Darstellung die in Fig. 10 bei X bezeichnete Einzelheit,
- Fig. 12: einen Teilschnitt längs der Linie C-C der Fig. 6,
- Fig. 13: einen Schnitt längs der Linie C-C der Fig. 6,
- Fig. 14: die bei V in Fig. 6 dargestellte Einzelheit,
- Fig. 15: die bei Z in Fig. 6 dargestellte Einzelheit,
- Fig. 16: einen Teilschnitt längs der Linie E-E der Fig. 6,
- Fig. 17: die Wanne gemäß der Ausführungsform nach den Fig. 6 bis 11 in einer Draufsicht,
- Fig. 18: einen Schnitt längs der Linie C-C der Fig. 17,
- Fig. 19: einen Schnitt längs der Linie B-B der Fig. 17,
- Fig. 20: eine Einzelheit gemäß dem Pfeil X in Fig. 17,
- Fig. 21: eine Einzelheit gemäß dem Pfeil Y in Fig. 17,
- Fig. 22: eine Einzelheit gemäß dem Pfeil T in Fig. 17, und
- Fig. 23: einen Teilschnitt gemäß der Linie A-A der Fig. 17.

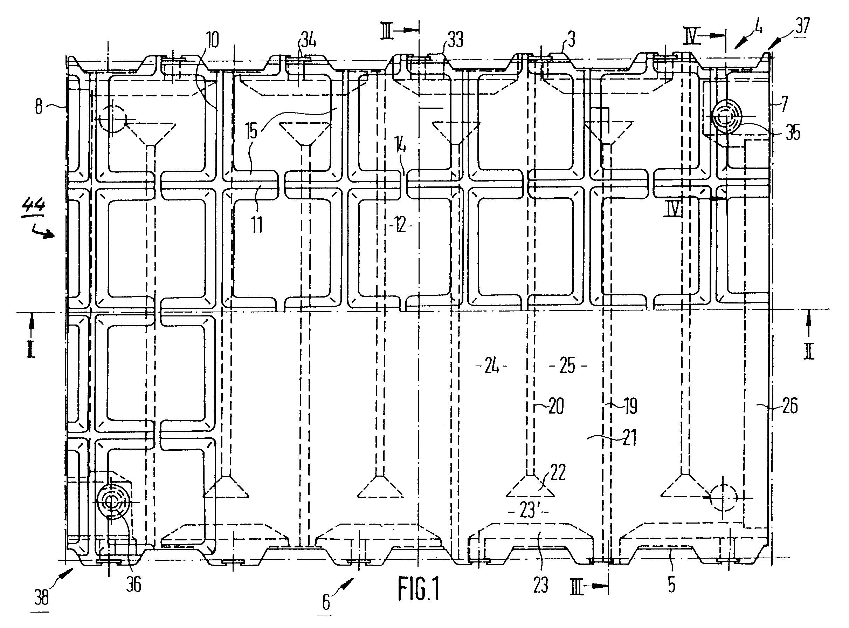

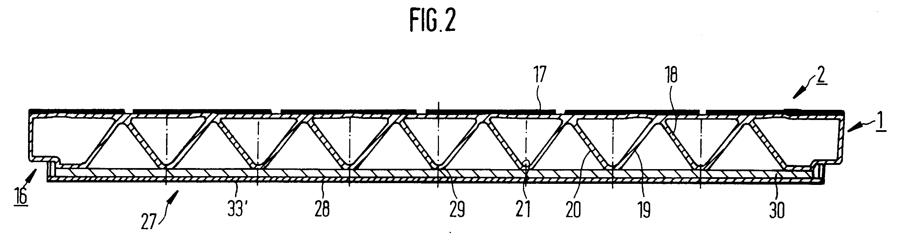

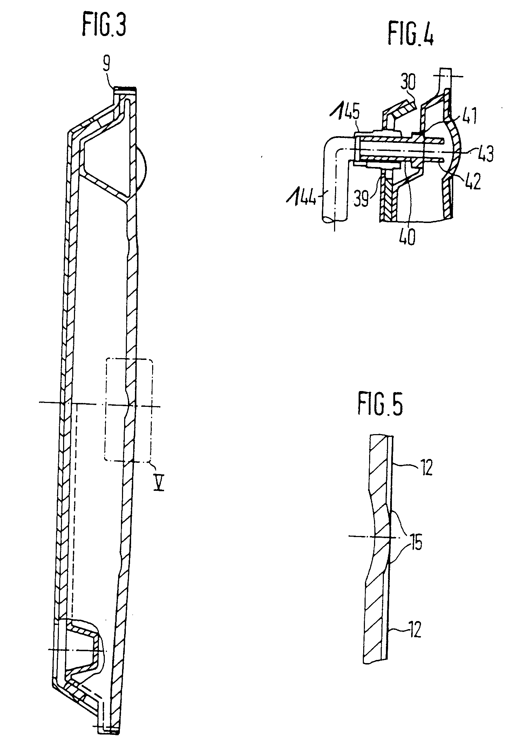

Gemäß der in den Fig. 1 bis 5 dargestellten Ausführungsform dient das mit 1 bezeichnete Formteil zum segmentweisen Aufbau von Bodenbelägen in Viehställen. Es weist auf seiner Oberseite einen Teil der Trittfläche 2 eines Zwischenbodens auf und hat einen allgemein rechteckigen Grundriß. An den längeren Rechteckseiten weist das Formteil 1 eine Verzahnung auf. Die Zähne 3 der Rechteckseite 4 sind gegenüber den Zahnlücken 5 der Rechteckseite 6 angeordnet. Hierdurch fluchten die kürzeren Rechteckseiten 7, 8 benachbarter Formteile 1 bei ineinander greifenden Verzahnungen. Die Zahnköpfe 3 sind auf ihrer Unterseite mit fluchtenden Schlitzen 9 ausgespart, mit denen sich das Formteil 1 an seinen Längskanten auf nicht dargestellten Roststäben abstützt. An den kurzen Rechteckseiten 7, 8 sind Aussparungen und Zapfen angebracht, welche nicht dargestellt sind. Bei aneinander anliegenden Rechteckseiten 7, 8 greifen die Zapfen in die Aussparungen ein, wodurch die Teile horizontal und vertikal verschiebungssicher gelagert sind. Aus mehreren Formteilen 1 ergibt sich dadurch eine durchgehende Trittfläche auf dem über dem Rost gelagerten Zwischenboden.

Diese Trittfläche ist durch Querrippen 10, welche parallel zu den kürzeren Rechteckseiten 7 und 8 verlaufen, sowie durch Längsrippen 11, welche parallel zu den längeren Rechteckseiten angeordnet sind, in Taschen 12 regelmäßig unterteilt. Diese sind gegenüber den Rippen vertieft und untereinander mit Durchbrechungen 14 der Querrippen 11 verbunden. Auf diese Weise wird eine rutschsichere Oberfläche des Fertigteils geschaffen, die das Abgleiten der Hufe des Viehs verhindert. Hierbei sind die Rippen jeweils mit nach unten in die Felder 12 geneigten Flanken 15 versehen, welche die Hufe in die Felder 12 leiten.

Gemäß der Ausführungsform nach den Fig. 1 bis 5 ist die Trittfläche 2 auf der Oberseite eines Heizkörpers 16 ausgebildet, in dem der Formkörper den Deckel bildet, der in einer Baueinheit einer auf ihrer Außenseite die Trittfläche 2 bildende Deckelplatte 17 mit einem Registerrohr 18 einer Warmwasserheizung 21 der Deckelplatte 17 vereinigt. Der Rohrmantel ist allgemein V-förmig. Seine nach unten konvergierenden Schenkel 19 und 20 sind aus der Deckelplatte 17 herausgeformt und mit einem gerundeten Steg 21 verbunden.

Gemäß dem Ausführungsbeispiel nach den Fig. 1 bis 5 besteht das Heizregister aus einem Registerrohr, welches mehrere Teillängen aufweist, die sich jeweils über die gesamte Dimension der Trittfläche zwischen den längeren Rechteckseiten erstreckt. Zwei benachbarte Teillängen 24, 25 weisen eine gemeinsame Mittelwand 20 auf, die in der Horizontalen verkürzt ist und an einem im Querschnitt dreieckigen Pfeil 22 endet, zwischen dem und der Formkörperwand 23' dadurch ein Verbindungskanal 23 für die benachbarten Teillängen 24, 25 entsteht. Diese Verbindungen sind abwechselnd den gegenüberliegenden längeren Rechteckseiten zugeordnet, so daß sich insgesamt eine mäanderförmige Führung des zirkulierenden Warmwassers durch das Register des Heizkörpers ergibt.

An den kürzeren Rechteckseiten befinden sich senkrecht zu den Randwänden 23 verlaufende Ränder 26, die die außenliegenden Heizkanäle abschließen. Auch sie bilden mit den beschriebenen Teilen eine Baueinheit.

Die Unterseite der Heizung 21 ist mit einer Wanne 27 abgedeckt. Sie vereinigt in einer Baueinheit 28 eine flache Bodenplatte 29, die eine Wärmedämmung 30 unterstützt. Hierbei handelt es sich um eine Isolierschicht aus einer Mineralfasermatte, die auf ihrer der Bodenplatte 29 zugekehrten Seite mit einer wärmereflektierenden Folie versehen ist. An den längeren Rechteckseiten der Wannenränder ist eine Arretierung der Wanne an dem Formkörper vorgesehen, die in dem Ausführungsbeispiel aus hammerförmigen Laschen 33, welche in Aussparungen 34 der Zahnköpfe einrasten, besteht.

Die Baueinheit der Wanne 21 ist wie der Formkörper ein aus Kunststoff bestehender, jedoch wesentlich leichterer Formkörper. Der Wannenboden 29 weist im wesentlichen kreisförmig begrenzte Aussparungen 35, 36 auf, die in den einander gegenüberliegenden Ecken 37, 38 des Heizkörpers angeordnet sind. Diese von im wesentlichen kreisförmigen Rändern umgebenen Aussparungen dienen zur Durchführung von geflanschten Rohrstutzen 40, die mit ihrem Flansch 41 ringförmig die Öffnung eines Innenrohrstutzens 42 umgeben. Diese inneren Öffnungen liegen unter einer domförmigen Erhebung 43 der Deckplatte 17. Die Rohrstutzen, welche mit der Wanne reibungsverschweißt sind, dienen der Zu- und Abführung des warmen Wassers. An der Aussparung 36 wird beispielsweise das Warmwasser zugeführt, während an der Aussparung 35 eine Abführung des Warmwasser erfolgt, nachdem es mäanderförmig das Heizregister durchflossen hat.

Auf dem Rohrstutzen 40 ist ein vorzugsweise aus Kunststoff bestehender Verbindungsschlauch 144 mit seinem Ende 145 übergestülpt. Es kann sich hierbei um einen Rohrfitting handelt, der auf das Ende eines nicht dargestellten Schlauches seinerseits aufgeschoben und auf diesem befestigt ist. Bei fertig montierten Böden sind die Verbindungsschläuche so angebracht, daß sich ein geschlossener Warmwasserkreislauf ergibt.

Da die Noppen 43 mit ihren Rändern die Innenrohrstutzen verhältnismäßig eng umgeben, lassen sie sich auch infolge ihrer Anbringung in den Ecken 37, 38 so anordnen, daß sie die Trittfläche nicht stören, d.h. keine Hindernisse für die Hufe des Viehs bilden.

Nicht dargestellt ist die Möglichkeit, ein Formteil als solches oder mehrere zu einer Teilfläche des Bodens zusammengesetzter Formteile 1 mit einem oder mehreren konventionellen Fertigteilen zu verbinden, die eine oder mehrere unbeheizte Restflächen des Bodens bilden, die von unbeheizten Formkörpern gebildet werden, welche aber ebenso wie die Formteile 1 jeweils an einem gegenüberliegenden Randpaar 4, 6 horizontal verzahnt und an dem anderen Randpaar 7, 8 vertikal verzapft sowie auf dem Rost als durchgehender Bodenbelag abgestützt sind. Das setzt natürlich voraus, daß die Verzahnungen und Verzapfungen der Fertigteile einander entsprechen.

Wenn das nicht der Fall ist, verwendet man in den Fugen benachbarter Fertigteile diese ausfüllende Fugenleisten, die auf ihren gegenüberliegenden senkrechten Seiten die zur Verzapfung dienenden Teile aufweisen.

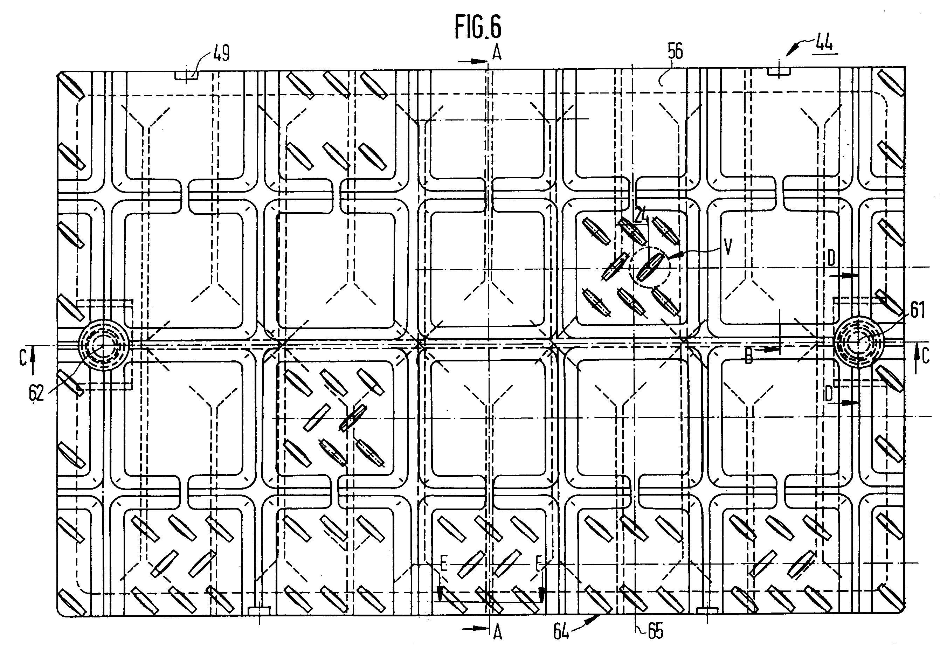

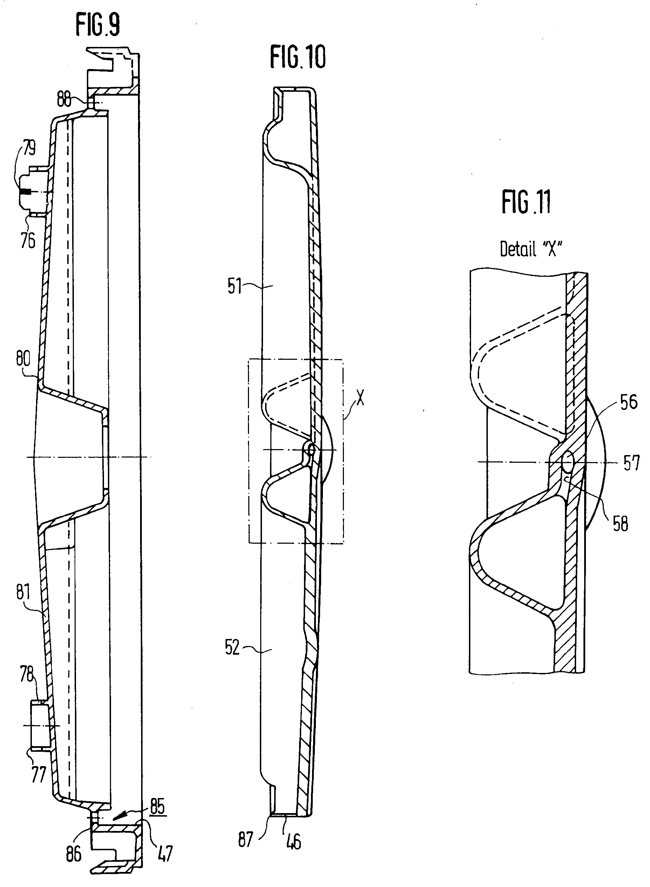

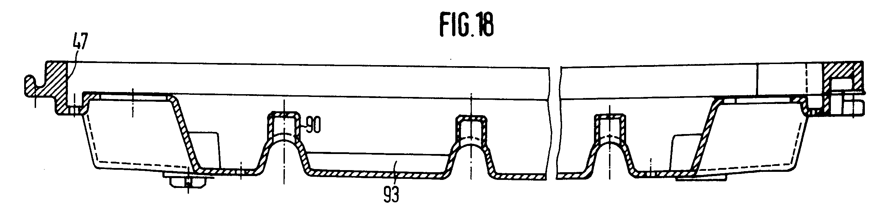

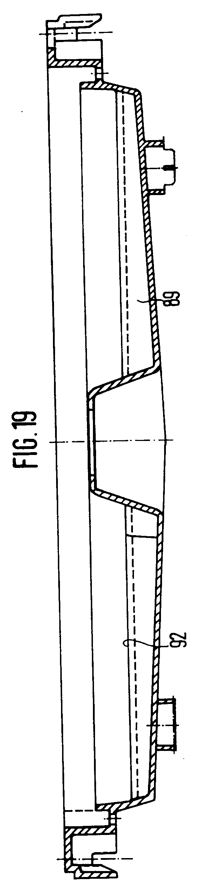

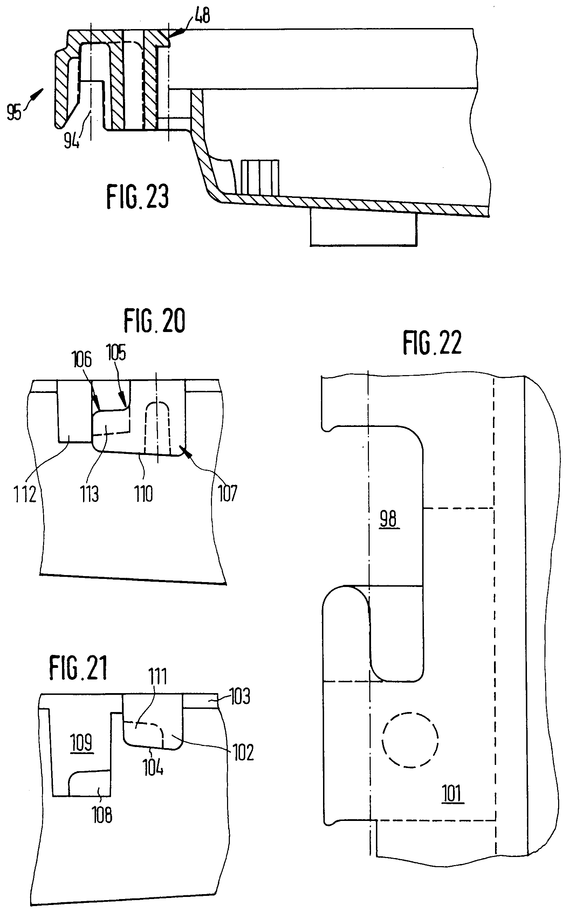

Die in Fig. 6 bis 24 dargestellte Ausführungsform wird bevorzugt, weil sie in mehrfacher Hinsicht gegenüber der Ausführungsform nach den Fig. 1 bis 5 optimiert ist. Dabei ist der Formkörper 44 dieser Ausführungsform in Fig. 6 dargestellt, während die Fig. 17 bis 23 die mit dem Formkörper 44 lösbar verbundene Wanne 27 wiedergibt. Die Wärmedämmung 30 verwendet die in dem Hohlraum zwischen der Wanne 27 und dem Formkörper 23 untergebrachte Mineralfasermatte. Nach dem Einlegen dieser Matte wird durch die Herstellung der Verbindung der Wanne 27 mit dem Formkörper 44 das Formteil 1 als Fertigteil angeliefert. Dann bildet der Formkörper 44 den Deckel 45 des zuvor erwähnten Hohlkörpers 16. Der für diese Ausführungsform allgemein mit 46 (Fig. 10) bezeichnete, umlaufende Deckelrand paßt zwischen den nach oben vorstehenden Wannenrand 47 (Fig. 9 und 18) und wird in seiner Endlage elastisch arretiert, wobei nach innen vom Wannenrand 47 vorstehende keilförmige Zungen 48 (Fig. 23) beim Einsetzen des Deckels zunächst nach außen ausweichen und in der Endlage des Deckels in Aussparungen 49 (Fig. 6) eingreifen; auf umgekehrtem Weg lassen sich die Teile der Arretierung voneinander lösen.

Auch bei dieser Ausführungsform ist die Heizung in einem Register 50 untergebracht, das jedoch im Gegensatz zur Ausführungsform nach den Fig. 1 bis 5 zwei symmetrisch zur Mittellinie angeordnete Rohrzüge 51, 52 aufweist (Fig. 10). Diese Rohrzüge führen das Heizmedium, welches von Warmwasser gebildet wird, ebenfalls mäanderförmig unter der Trittfläche 2 des Formkörpers 44, um diese zu erwärmen, wobei sich in den Rohren 50, 51 je ein Hauptstrom des Heizmediums ergibt. Die Warmwasserzu- und -ableitungen 54 und 55 sind in der die Symmetrieebene darstellenden Längsmitte 53 (Fig. 6 sowie 7 bis 12) angeordnet und identisch ausgebildet (Fig. 12). Die auch in diesen Rohrzügen vorhandenen Teillängen gehen außen von einer Formkörperkante aus und reichen bis zur Mitte 53 des Formkörpers 44. Dort ist aus der Deckelplatte 56 ein Mittelkanal 57 ebenso wie die Rohrzüge nach unten und in den Hohlraum der Wanne herausgeformt, welcher der Mittellinie 53 folgt. An den Umkehrstellen der Mäander befinden sich Beipässe 58, durch die ein Teilstrom aus den Rohrzügen gespeist wird.

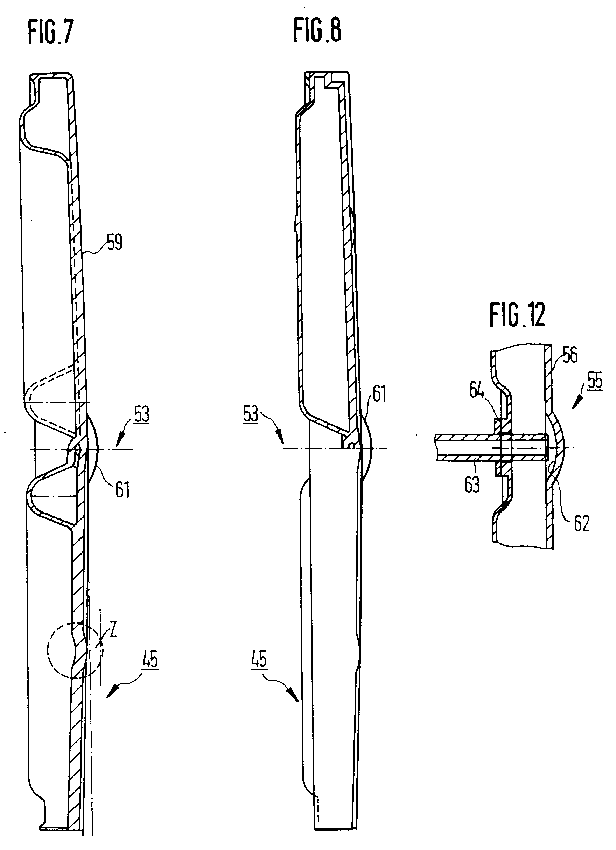

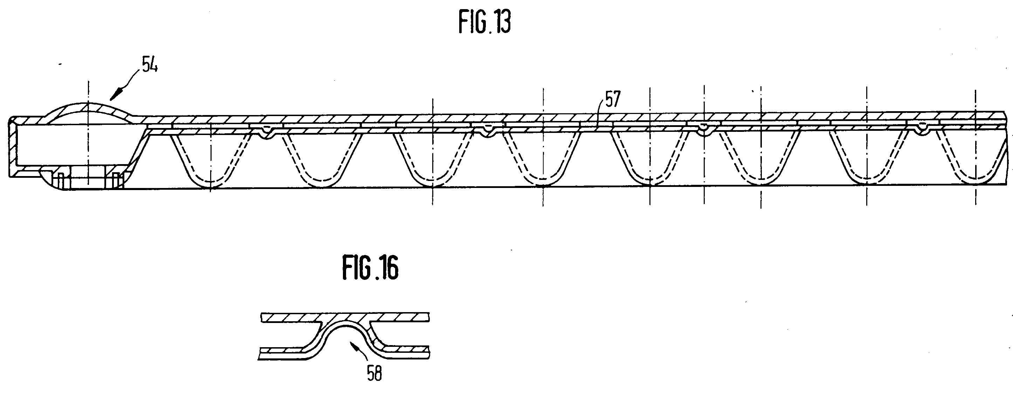

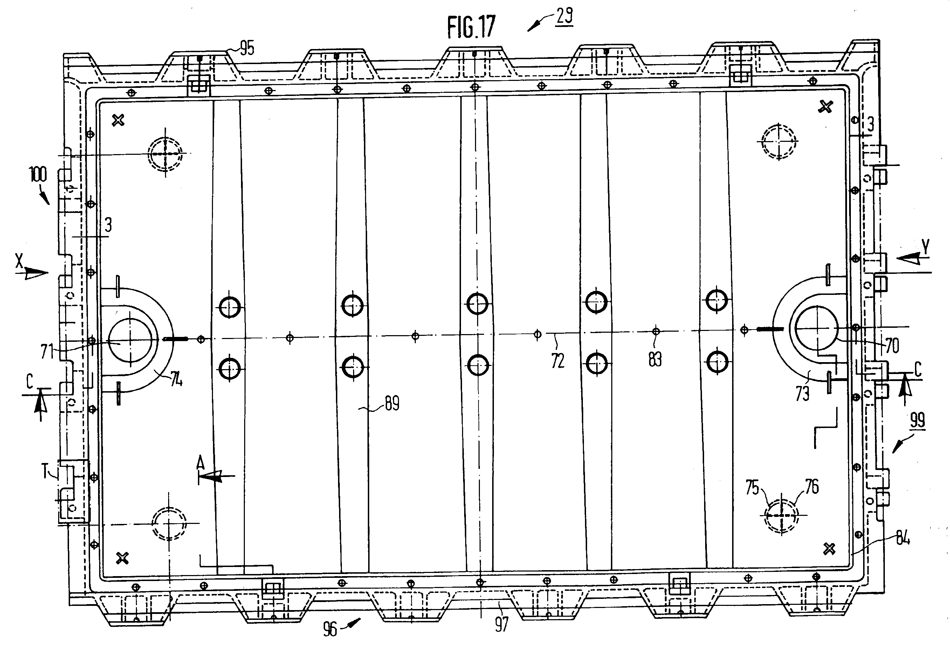

Die Fig. 7 läßt erkennen, daß die Trittfläche 2 der Deckelplatte 56 zur Mittellinie 53 aufsteigende Flanken 59, 60 aufweist. Infolgedessen befinden sich die jeweils höchsten Stellen der Rohrzüge an der Mittellinie 53 mit der Folge, daß aus dem Warmwasser der Hauptströme ausperlende Luft in den Mittelkanal 57 gelangt, der in der abgebrochenen Darstellung der Fig. 13 im Längsschnitt zu erkennen ist. Aus der Einzeldarstellung der Fig. 16 ist zu entnehmen, daß die Beipässe 58 in der gleichen Richtung wie die Flanken 59, 60 in Richtung auf den Mittelkanal 57 aufsteigen. Der Strömungsquerschnitt dieses Kanals ist, wie insbesondere ein mit der Fig. 11 vorzunehmender Vergleich ergibt, wesentlich geringer als der jeweilige Strömungsquerschnitt der Rohrzüge, wodurch sich in dem Mittelkanal 57 ein verhältnismäßig geringer Nebenstrom ergibt. Dagegen strömen in den Rohrzügen 51, 52 (Fig. 10) wesentlich größere Volumenströme, welche die Hauptmenge des Heizmediums ausmachen.

Aus den Fig. 7, 8 und 12 ist zu entnehmen, daß der Mittelkanal 57 unter jeweils einem Dom 61, 62 endet und daß der in Fig. 12 für den Dom 62 dargestellte Rohrstutzen 63, der mit dem entsprechenden Rohrstutzen des Domes 61 als Zu- oder Ablauf des Heizmediums verwendet werden kann, mit seiner Mündung oberhalb der Unterseite 62 der Platte 56 endet, so daß die Mündung höher als die Rohrzüge 51, 52, aber auch höher als die Mündungen des Mittelkanals 57 in die Dome liegt. Der Flansch 64 des Rohrstutzens 63 ist ebenfalls reibungsverschweißt. Aus den Fig. 7 und 8 ist ferner ersichtlich, daß beide Dome auf der Mittellinie 53 ausgerichtet sind.

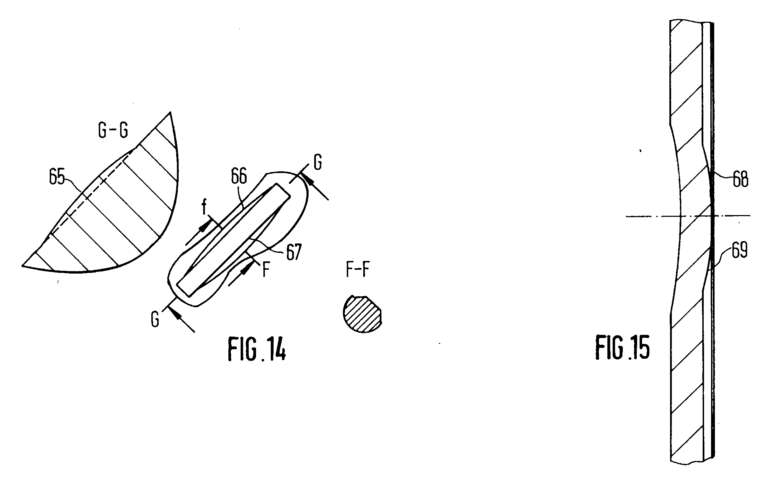

Die Deckelplatte 56 weist ebenso wie die Ausführungsform nach den Fig. 1 bis 5 eine Unterteilung in Taschen 12 auf, die im Zusammenhang mit der Fig. 1 dargestellt und beschrieben worden ist. In einigen der Taschen 12 sind jedoch Kurzrippen 64 in Reihen angeordnet, in denen die jeweiligen Kurzrippen um ca. 45° gegen die Mittellinie 65 der Taschen 12 geneigt sind, wobei in aufeinanderfolgenden Reihen diese Neigungen in entgegengesetzten Richtungen verlaufen. Hierdurch wird gewährleistet, daß die Flüssigkeiten zwischen den Kurzrippen ablaufen können, daß aber einem Abgleiten der Hufe der Tiere in allen horizontalen Richtungen entgegengewirkt wird. Wie die Fig. 14 erkennen läßt, weisen diese Kurzrippen eine gekrümmte Oberfläche 65 und an den Rippenenden auslaufende Flanken 66, 67 auf, wodurch scharfe Kanten vermieden, aber eine ausreichende Formsteifigkeit erhalten wird. Aus der Fig. 15 geht dagegen die Neigung der Flanken 68, 69 der Taschen hervor, die, wie eingangs beschrieben, die Hufe zur Taschenmitte hin abgleiten lassen.

Die Bodenplatte 29 ist mit ihren Einzelheiten in Fig. 17 dargestellt. Aussparungen 70, 71 für die Rohrstutzen 51, 52 sind mit der Längsmitte 72 der Bodenplatte 29 ausgerichtet, jedoch in kegelstumpfförmigen Hülsen 73, 74 versenkt, die in der Bodenplatte eingeformt sind.

In den vier Ecken der im Grundriß rechteckigen Bodenplatte 29 befinden sich auf der Unterseite Hülsen 75, die sich mit ihren Stirnrändern 77 an Hülsen 78 abstützen, welche zu einem benachbarten Formteil 1 in einem Stapel gehören. Hohlkreuze 79 stehen über die Ränder 76 vor und lassen sich zur Herstellung eines Formschlusses mit dem Innenzylinder der Hülsen 78 bei der Herstellung eines Formteilstapels in die Hülsen 78 einführen (Fig. 9).

Durch diese Anordnung wird auch erreicht, daß die gemäß der in der Fig. 9 dargestellten Ausführungsform zur Mittellinie 72 einfallenden Böden 29 das Stapeln der Formteile nicht behindern. Diese Neigung der beiden Bodenflanken 80, 81 leitet andererseits Flüssigkeiten auf dem Boden zur Mitte hin ab. Mit der Längsmitte ausgerichtet sind Löcher 83 (Fig. 17). Die abgeleiteten Flüssigkeiten werden durch diese Löcher nach unten und außen abgeführt. Zur Trockenhaltung dient ferner eine umlaufende Leiste 84, welche die Innenwand einer Rinne 85 bildet, deren Boden 86 bei eingesetztem Formkörper 44 unter einer Tropfnase 87 liegt, die an den Längskanten des Formkörpers, wie bei 46 in Fig. 10 dargestellt, ausgeformt ist (Fig. 9). Der Rinnenboden 86 weist in Abständen angeordnete Löcher 88 auf, durch die die in der Rinne 85 gesammelten Flüssigkeiten ablaufen können.

Die Fig. 17 zeigt ferner im Zusammenhang mit der Fig. 18, daß die Bodenplatte 29 der Wanne mit mehreren nach innen in den Wannenraum vorstehenden Rippen 89 unterteilt ist. Diese Rippen sind in gleichmäßigen Abständen vorgesehen und tragen auf ihren Rücken Noppen 90, die beim Einlegen einer Wärmedämmatte 16, welche als Wärmedämmung 30 dient, mit dieser formschlüssig werden, da die Wärmedämmatte 16 entsprechende Lochungen aufweist, in die die Nocken eingreifen, sobald die Matte auf den Rücken 92 der Rippen 89 aufliegt. Hierdurch wird zusätzlich isolierender Luftraum wie bei 93 in Fig. 18 angedeutet geschaffen.

Das vorstehend beschriebene, fertige Formteil 1 läßt sich auf nicht dargestellten Roststäben auflegen und mit diesen in horizontaler Ebene formschlüssig machen. Quer zu den Roststäben läßt sich das Formteil daher nicht verschieben. Das gewährleisten Aussparungen 94 auf der Unterseite der Zähne 95 je einer Verzahnung 96, die an den gegenüberliegenden Wannenrändern ausgeformt ist (Fig. 17 und 23). Die Zähne 95 greifen dabei horizontal in die Zahnlückengründe 97 ein. In der dazu senkrechten Richtung wird der Formschluß durch Aussparungen 98 in den Wannenrändern 99, 100 herbeigeführt ( Fig. 17 und 20 bis 22). Diese Aussparungen befinden sich in den horizontalen Flanschen 101 dieser Wannenränder. In die Aussparungen 98 des Wannenrandes 99 greifen dabei Nocken 102 des Flansches 103 des umlaufenden Wannenrandes 100 ein (Fig. 21). Diese stützen sich mit ihrer Unterseite 104 auf einer Hammerkopffläche ab, welche zwischen den beiden Pfeilen 105 und 106 eines Stütznockens 107 im Wannenrand 99 ausgebildet ist.

Neben den Nocken 102 befinden sich mit der Außenkante des Wannenflansches 103 fluchtende Lagersteine 109, von denen nach außen Stützen 108 vorstehen, welche die Stütznocken 107 auf ihrer Unterseite 110 unterstützen, wobei die Nocken 102 infolge ihrer Hinterschneidungen 111 mit Vorsprüngen 112 am gegenüberliegenden Wannenrand formschlüssig werden. Auch die Stütznocken 107 weisen eine Hinterschneidung 113 ihres Hammerkopfes auf, in die die Nocken 102 eingreifen. Im Ergebnis sind auf diese Weise die benachbarten Flanschen unterstützt, jedoch in allen horizontalen Richtungen formschlüssig, so daß der in einer Bodenfläche eingebaute Formkörper 1 sich nicht verschieben und seine Flanschen sich unter dem Gewicht der Tiere nicht verformen können.

Bei Fertigung der Formkörper 101 gemäß der Ausführungsform nach den Fig. 6 bis 24 aus Kunststoff versteht es sich von selbst, daß die beschriebenen Teile an einer Baueinheit vorgesehen sind.

## Patentansprüche

1. Formteil mit einer auf der Oberseite eines plattenförmigen Formkörpers (44) ausgebildeten Trittfläche (2), der zusammen mit weiteren Formkörpern eine Standfläche für Vieh in Ställen durch formschlüssige Verlegung auf einem Rost und durch ineinander greifende Verzahnungen (6, 96), Aussparungen und Vorsprünge (3, 5, 94, 95) einen zusammengesetzten Boden bildet, und mit einer Isolierschicht (30, 93) zur Wärmedämmung,
**dadurch gekennzeichnet, daß**
der Formkörper (44) den Deckel (17, 45, 56) eines Hohlkörpers (16) bildet, an dem eine lösbare Bodenplatte (27-29, 80, 81) eine Heizung (21, 51, 52) der Trittfläche (2) abdeckt, und daß zwischen der Bodenplatte (27-29, 80, 81) und der Heizung (21, 51, 52) die Isolierschicht (30, 93) zur Wärmedämmung der Heizung (21, 51, 52) nach unten angeordnet ist.

2. Formteil nach Anspruch 1, dadurch gekennzeichnet, daß die Heizung (21) in einer Zwischenschicht unter dem Deckel (45) und der Isolierschicht untergebracht ist.

3. Formteil nach Anspruch 1, dadurch gekennzeichnet, daß die Heizung (21) für ein strömendes Heizmedium ausgelegt und insbesondere als Warmwasserheizung ausgebildet ist, deren Rohrregister (18, 50) einen aus der Unterseite des Formkörpers (1) ausgeformten Rohrmantel (19-21) aufweist und eine Baueinheit mit dem Formkörper (1) bildet.

4. Formteil nach Anspruch 3, gekennzeichnet durch ein in mehreren über eine Dimension der Trittfläche (2) durchgehende, untereinander verbundene und nebeneinander in einer gemeinsamen Ebene angeordnete Teillängen (24, 25) unterteiltes Rohr (18) des Registers (50), wobei jeweils zwei nebeneinander angeordnete Teillängen (24, 25) eine gemeinsame Mittelwand (20) aufweisen, welche von einer Deckelkante (23) ausgeht und im Abstand von der gegenüberliegenden Deckelkante (23') endet.

5. Formteil nach einem der Ansprüche 3 oder 4, dadurch gekennzeichnet, daß der Rohrmantel (19-21) des Registerrohres (18) im wesentlichen V-förmig mit nach unten konvergierenden V-Schenkeln (19, 20) ausgebildet ist.

6. Formteil nach einem der Ansprüche 3 bis 5, dadurch gekennzeichnet, daß das Register (50) aus mindestens zwei Rohrzügen (51, 52) mit gemeinsamer Zu- und Ableitung (54, 55) des Heizmediums besteht, wobei die Teillängen jedes Rohrzuges (51, 52) jeweils außen an einer von zwei parallelen Formkörperkanten und einer dazu parallelen Mittelline (53) des Formkörpers (45) an einem dieser folgenden Kanal (57) enden, mit dem die Teillängen durch Beipässe (58) verbunden sind, wobei der Mittelkanal (53) zur Sammlung von Gaseinschlüssen des Heizmediums dient.

7. Formteil nach Anspruch 6, dadurch gekennzeichnet, daß die Deckelplatte (56) zur Mittellinie (53) aufsteigende Flanken (59, 60) aufweist und der Querschnitt des Mittelkanals (57) so gewählt ist, daß sich in ihm ein Nebenstrom des Heizmediums und in den Rohrzügen (51, 52) je ein Hauptstrom ausbildet.

8. Formteil nach einem der Ansprüche 3 bis 7, dadurch gekennzeichnet, daß die Bodenplatte (29) Aussparungen aufweist, die zur Durchführung von in das Register mündenden Zu- und Ablaufrohrstutzen (63) für das Heizmedium dienen, wobei über den Mündungen jeweils ein Dom (61, 62) vorgesehen ist, der zur Sammlung von Gaseinschlüssen des Heizmediums dient, wobei die Mündungen der Zu- und Ablaufstutzen (63) höher als der Mittelkanal (57) in den Domen (61, 62) angeordnet sind.

9. Formteil nach einem der Ansprüche 1 bis 8, dadurch gekennzeichnet, daß die Bodenplatte (29) Teil einer Wanne (27) ist, in die der Formkörper (44) eingelassen ist, wobei an den Außenseiten der senkrecht zu den Roststäbem verlaufenden Wannenränder die Verzahnungen und Verzapfungen angeordnet sind, welche zur verschiebungssicheren Verlagerung des Formteils im Bodenbelag dienen.

10. Formteil nach Anspruch 8, dadurch gekennzeichnet, daß seine Ränder (46, 47) an ihren Innenseiten wenigstens zweier paralleler Ränder (46, 47) arretiert sind und die Arretierung (33, 34) aus mehreren elastisch ein- und ausrastenden Vor- und Einsprüngen (48, 49) besteht.

11. Formteil nach einem der Ansprüche 1 bis 10, dadurch gekennzeichnet, daß eine an den Rändern (46) des Formkörpers (44) angeordnete umlaufende Tropfnase (87) zur Ableitung von Flüssigkeiten von der Trittfläche (2) nach unten und an den Wannenrändern eine Rinne (85) mit Ablauflöchern (88) zur Fernhaltung von Flüssigkeiten von der Wanne (27) vorgesehen ist, die unter der Tropfnase (87) angeordnet ist.

12. Formteil nach einem der Ansprüche 1 bis 11, dadurch gekennzeichnet, daß die Trittfläche (2) durch mehrere erhabene Rippen (10, 11) in Taschen 12 unterteilt ist und die Ablaufrinnen für Flüssigkeiten durch Unterbrechungen (14) der Rippen (10, 11) ausgebildet sind, wobei wenigstens einige Taschen (12) mit einem zusätzlichen Gleitschutz aus erhabenen Kurzrippen (64) versehen sind, die in Reihen mit entgegengesetzten Neigungen angeordnet sind.

13. Formteil nach einem der Ansprüche 1 bis 12, dadurch gekennzeichnet, daß die Bodenplatte (29) nach unten in Richtung auf eine Mittellinie (72) geneigte Flanken (8, 81) aufweist und längs der Mittellinie eine Mehrzahl von Durchbrechungen (83) zur Ableitung der auf den Flanken (80, 81) ablaufenden Flüssigkeit vorgesehen sind.

14. Formteil nach einem der Ansprüche 1 bis 13, dadurch gekennzeichnet, daß die Flanken (80, 81) mit mehreren nach innen in den Wannenraum vorstehenden Rippen (89) unterteilt sind, welche zur Aussteifung des Wannenbodens (29) und zur Schaffung von isolierenden Lufträumen (93) unter einer Wärmedämmplatte (16) dienen, die zusammen mit dem Luftraum (93) die Wärmedämmung (30) bildet.

15. Formteil nach einem der Ansprüche 1 bis 14, dadurch gekennzeichnet, daß auf den Rippen (89) Noppen (90) angeordnet sind, welche in Aussparungen der Wärmedämmplatte (16) eingreifen.

16. Formteil nach einem der Ansprüche 1 bis 15, dadurch gekennzeichnet, daß die Heizung in einer auf dem Wannenboden (29) angeordneten, gegenüber dem Wannenboden isolierten Heizschicht angeordnet ist.

17. Formteil nach Anspruch 16, dadurch gekennzeichnet, daß die Heizschicht formschlüssig unter Benutzung der Wanne (27) als Schalung in die Wanne (27) eingegossen ist.

18. Formteil nach einem der Ansprüche 1 bis 17, dadurch gekennzeichnet, daß die Wärmedämmschicht in die Wanne (27) eingespritzt ist.

19. Formteil nach einem der Ansprüche 1 bis 18, dadurch gekennzeichnet, daß aus dem Wannenboden (29) auf seiner Außenseite Hülsen (75, 78) ausgeformt sind, deren Stirnseiten (76, 77) in einer gemeinsamen Ebene angeordnet sind und als Lagerflächen bei mehreren übereinander gestapelten Formteilen (1) dienen.

20. Formteil nach einem der Ansprüch 1 bis 19, dadurch gekennzeichnet, daß die Aussparungen und Vorsprünge so angeordnet und ausgebildet sind, daß benachbarte Formteilränder in beiden Richtungen der Ränder sowie in senkrechten Richtungen dazu formschlüssig sind.

## Claims

1. A moulded element, having a raised surface (2) constructed on the upper side of a flat panel-shaped moulded body (44), which, together with additional moulded bodies, forms a composite flooring and supporting surface for animals in stables by means of positive fit installation on a grating and by means of inter-locking indentations (6, 96), recesses and projections (3, 5, 94, 95), and having an insulating layer (30, 93) for thermal insulation, characterised in that the moulded body (44) forms the top cover (17, 45, 56) of a hollow body (16) on which a removable base-plate (27-29, 80, 81) covers a heating system (21, 51, 52) for the raised surface (2) and that the insulating layer (30, 93) for the thermal insulation of the heating elements (21, 51, 52) is arranged towards the lower side, between the base-plate (27-29, 80, 81) and the heating system (21, 51, 52).

2. A moulded element according to claim 1, characterised in that the heating (21) is housed in an intermediate layer under the top cover (45) and the insulating layer.

3. A moulded element according to claim 1, characterised in that the heating (21) is designed for a flowing medium of heat and is preferably constructed as a hot-water heating system, the pipe register (18, 50) of which comprises a tubular jacket (19-21) shaped to project from the lower side of the moulded body (1) and forms a single constructional unit together with the moulded body (1).

4. A moulded element according to claim 3, characterised by a pipe (18) of the register (50) which is divided up into several partial lengths (24, 25) traversing completely one dimensional face of the raised surface (2) and being connected to each other and arranged adjacent to each other in a common plane, whereby in each case two partial lengths (24, 25) arranged adjacent to each other comprise a common central wall (20) which commences at one top cover edge (23) and ends at a clearance distance from the opposite top cover edge (23').

5. A moulded element according to one of the claims 3 or 4, characterised in that the tubular jacket (19-21) of the register pipe (18) is constructed essentially to be V-shaped with downward converging V-shanks (19, 20).

6. A moulded element according to one of the claims 3 to 5, characterised in that the register (50) consists of at least two tubular elements (51, 52) with a common flow and return circuit (54, 55) for the heating medium, whereby the partial lengths of each of the tubular elements (51, 52) terminate, in each case externally on one of two parallel edges of the moulded body and on a similarly parallel central line (53) of the moulded body (45), on a channel (57) which follows said central line (53) and to which the partial lengths are connected by means of supplementary passages (58), whereby the central channel (53) serves to collect any pockets of gas from the heating medium.

7. A moulded element according to claim 6, characterised in that the top cover plate (56) comprises flanks (59, 60) ascending to the central line (53) and the transverse section of the central channel (57) is selected in such a way that a subsidiary stream of the heating medium is able to flow in the central channel (57) itself and a main stream in each of the tubular elements (51, 52).

8. A moulded element according to one of the claims 3 to 7, characterised in that the base-plate (29) comprises recesses which serve to allow the passage of the flow and return pipe connections (63) for the heating medium with their confluence at the register, whereby a dome (61, 62) which serves to collect any pockets of gas from the heating medium is provided above each of the confluences, whereby the confluences of the flow and return connection pipes (63) are arranged within the domes (61, 62) at a higher point than the central channel (57).

9. A moulded element according to one of the claims 1 to 8, characterised in that the base-plate (29) is part of a pan (27) into which the moulded body (44) is mounted, whereby, on the outer sides of the edges of the pan which extend vertically to the grating bars, are arranged the indentations and tongues which serve to hold the moulded element firmly and without shifting within the surface of the flooring area.

10. A moulded element according to claim 8, characterised in that its edges (46, 47) are fitted with an arresting system on their inner sides, at least of two parallel edges (46, 47) and the arresting system (33, 34) consists of several flexibly mounted projections and recesses (48, 49) for both inward and outward retention purposes.

11. A moulded element according to one of the claims 1 to 10, characterised in that a drainage snout (87) is provided arranged around the edges (46) of the moulded body (44) for draining liquids downwards from the raised surface (2) and a gutter (85) is provided on the edges of the pan having outlet holes (88) for keeping liquids away from the pan (27) which is arranged beneath the drainage snout (87).

12. A moulded element according to one of' the claims 1 to 11, characterised in that the raised surface (2) is divided up into cavity pockets (12) by several raised ribs (10, 11), and the outlet gutters for liquids are formed by means of breach gaps (14) on the ribs (10, 11), whereby at least some cavity pockets (12) are provided with additional anti-skid protection in the form of raised shortened ribs (64) which are arranged in rows inclined in opposite directions.

13. A moulded element according to one of the claims 1 to 12, characterised in that the base-plate (29) comprises flanks (8, 81) inclined downwards in the direction of a central line (72), and along the central line a plurality of breach gaps (83) is provided for draining off the liquid running down the flanks (80, 81).

14. A moulded element according to one of the claims 1 to 13, characterised in that the flanks (80, 81) are divided up by several ribs (89) projecting inwards into the internal area of the pan, said ribs (89) serving to brace the floor (29) of the pan and also to create insulating air spaces (93) beneath a heat insulation plate (16) which, together with the air space (93), forms the thermal insulation (30).

15. A moulded element according to one of the claims 1 to 14, characterised in that rounded protrusions (90), which engage into recesses in the heat insulation plate (16), are arranged on the ribs (89).

16. A moulded element according to one of the claims 1 to 15, characterised in that the heating system is located in a heating layer which is arranged on the floor (29) of the pan and is also insulated against the floor of the pan.

17. A moulded element according to claim 16, characterised in that the heating layer is a positive fit integrated with the pan (27) by means of using the pan (27) as a shell-mould casting.

18. A moulded element according to one of the claims 1 to 17, characterised in that the thermal insulation layer is injected into the pan (27).

19. A moulded element according to one of the claims 1 to 18, characterised in that, moulded to project from the outside of the floor (29) of the pan, there are sleeves (75, 78) of which the frontal sides (76, 77) are arranged in a common plane and which serve as storage surfaces when several moulded elements (1) are stacked on top of each other.

20. A moulded element according to one of the claims 1 to 19, characterised in that the recesses and projections are arranged and constructed in such a way that adjacent moulded element edges are a positive fit in both directions of the edges as well as in the vertical directions to them.

## Revendications

1. Pièce de forme comportant une surface de circulation (2) réalisée sur la surface supérieure d'un corps de forme (44), en forme de plaque, qui constitue, ensemble avec d'autres corps de forme, une surface de stationnement pour du bétail en étable, par un engagement avec conjugaison de formes sur une grille, et qui, par des dents (6, 96), des évidements et des saillies (3, 5, 94, 95) faisant prise les uns dans les autres, forme un fond assemblé et comportant une couche isolante (30, 93) pour le calorifugeage,
caractérisée en ce que
le corps de forme (44) constitue le couvercle (17, 45, 56) d'un corps creux (16), contre lequel une plaque de fond (27-29, 80, 81) démontable recouvre un chauffage (21, 51, 52) de la surface de circulation (2), et en ce que la couche isolante (30, 93) pour le calorifugeage du chauffage (21, 51, 52) est disposée vers le bas, entre la plaque de fond (27-29, 80, 81) et le chauffage (21, 51, 52).

2. Pièce de forme suivant la revendication 1, caractérisée en ce que le chauffage (21) est placé dans une couche intercalaire, sous le couvercle (45) et la couche isolante.

3. Pièce de forme suivant la revendication 1, caractérisée en ce que le chauffage (21) est conçu pour un fluide de chauffage circulant et, en particulier, sous la forme d'un chauffage à eau chaude, dont le registre tubulaire (18, 50) présente une surface de tube (19-21) formée à partir de la face inférieure du corps de forme (1) et constitue une unité de construction avec le corps de forme (1).

4. Pièce de forme suivant la revendication 3, caractérisée par un tube (18) divisé en plusieurs longueurs partielles (24, 25), disposées les unes à côté des autres dans un plan commun et reliées entre elles, et placées transversalement suivant une dimension de la surface de circulation (2), étant entendu que chaque fois deux longueurs partielles (24, 25), disposées l'une à côté de l'autre, présentent une paroi centrale commune (20) qui part d'une arête (23) du couvercle et se termine à une certaine distance de l'arête (23') située en face.

5. Pièce de forme suivant l'une des revendications 3 ou 4, caractérisée en ce que la surface de tube (19-21) du tube de registre (18) est réalisée avec une forme essentiellement en V, présentant des branches du V (19, 20) convergeant vers le bas.

6. Pièce de forme suivant l'une des revendications 3 à 5, caractérisée en ce que le registre (50) est constitué d'au moins deux tronçons de tube (51, 52) comportant une conduite d'arrivée et une conduite de départ (54, 55) du fluide de chauffage, les longueurs partielles de chaque tronçon de tube (51, 52) se terminant chacune à l'extérieur sur l'une de deux arêtes parallèles du corps de forme et sur une ligne médiane (53) du corps de forme (45), parallèle à elles, sur un canal (57) qui lui fait suite, et auquel les longueurs partielles sont reliées par des dérivations (58), le canal central (53) servant à collecter des bulles de gaz du fluide de chauffage.

7. Pièce de forme suivant la revendication 6, caractérisée en ce que la plaque de couvercle (56) présente des flancs (59, 60) montant vers la ligne médiane (53) et en ce que la section du canal central (57) est choisie telle qu'il se forme en lui un courant secondaire du fluide de chauffage et, dans chacun des tronçons de tube (51, 52), un courant principal.

8. Pièce de forme suivant l'une des revendications 3 à 7, caractérisée en ce que la plaque de fond (29) présente des évidements qui servent au passage de tronçons de tube (63) d'arrivée et de départ pour le fluide de chauffage, débouchant dans le registre, un dôme (61, 62) étant prévu chaque fois au-dessus de leurs orifices et servant à collecter des bulles de gaz du fluide de chauffage, ces orifices des tronçons de tube (63) d'arrivée et de départ étant disposés, dans les dômes (61, 62), plus haut que le canal central (57).

9. Pièce de forme suivant l'une des revendications 1 à 8, caractérisée en ce que la plaque de fond (29) est une partie d'une cuve (27) dans laquelle est introduit le corps de forme (44), les dents et tenons étant disposés sur les faces extérieures des bords de cuve, disposés perpendiculairement aux tronçons de tube, ces dents et tenons servant au positionnement, dans le revêtement du fond, de la pièce de forme, sans possibilité de coulissement.

10. Pièce de forme suivant la revendication 8, caractérisée en ce que ses bords (46, 47) sont bloqués sur ses faces internes d'au moins deux bords (46, 47) parallèles, et en ce que ce dispositif de blocage (33, 34) consiste en plusieurs évidements et saillies élastiques, en retrait ou en saillie.

11. Pièce de forme suivant l'une des revendications 1 à 10, caractérisée en ce qu'un bec circulaire formant égouttoir (87), disposé sur les bords (46) du corps de forme 44) est prévu pour l'égouttage de liquides vers le bas depuis la surface de circulation (2) et en ce qu'il est prévu, sur les bords de la cuve, une nervure (85) disposée sous le bec d'égouttage (87) et munie de trous d'écoulement (88), pour écarter des liquides de la cuve (27).

12. Pièce de forme suivant l'une des revendications 1 à 11, caractérisée en ce que la surface de circulation (2) est divisée en poches (12) par plusieurs nervures en relief (10, 11), et en ce que les nervures d'écoulement pour les liquides sont formées par des interruptions (14) des nervures (10, 11), étant entendu qu'au moins quelques poches (12) sont prévues avec une protection supplémentaire contre le glissement, constituée de courtes nervures (64) en relief, disposées en rangées, avec des pentes opposées.

13. Pièce de forme suivant l'une des revendications 1 à 12, caractérisée en ce que la plaque de fond (29) présente des flancs (8, 81) inclinés vers le bas en direction d'une ligne médiane (72), et en ce que, le long de la ligne médiane, il est prévu une multiplicité de percements (83) pour faire écouler le liquide s'écoulant sur les flancs (80, 81).

14. Pièce de forme suivant l'une des revendications 11 à 13, caractérisée en ce que les flancs (80, 81) sont divisés avec plusieurs nervures (89) en saillie vers l'intérieur dans le volume de la cuve, ces nervures servant à rigidifier le fond (29) de la cuve, et à créer des volumes d'air isolants (93) sous une plaque calorifuge (16), qui forme, ensemble avec le volume d'air (93), le calorifugeage.

15. Pièce de forme suivant l'une des revendications 1 à 14, caractérisée en ce que sur les nervures (89), sont disposés des ergots (90) qui s'engagent dans des évidements de la plaque calorifuge (16).

16. Pièce de forme suivant l'une des revendication 1 à 15, caractérisée en ce que le chauffage est disposé dans une couche chauffante placée sur le fond (29) de la cuve et isolée du fond de la cuve.

17. Pièce de forme suivant la revendication 16, caractérisée en ce que la couche chauffante est moulée en faisant prise par conjugaison de formes dans la cuve (27), en utilisant cette cuve (27) comme coffrage.

18. Pièce de forme suivant l'une des revendications 1 à 17, caractérisée en ce que la couche calorifuge est injectée dans la cuve (27).

19. Pièce de forme suivant l'une des revendications 1 à 18, caractérisée en ce qu'à partir du fond (29) de la cuve, sur ses faces extérieures, sont formés des manchons (75, 78), dont les faces en bout (76, 77) sont disposées dans un plan commun et servent de surface d'appui pour empiler plusieurs pièces de forme (1) les unes sur les autres.

20. Pièce de forme suivant l'une des revendications 1 à 19, caractérisée en ce que les évidements et les saillies sont disposées et réalisées de telle façon que les bords voisins de la pièce de forme constituent un engagement par conjugaison de formes dans les deux directions des bords ainsi que dans des directions perpendiculaires à celles-ci.
